# EUROPEAN PATENT APPLICATION

(11) **EP 1 386 733 A1**
(43) Date of publication of application: **04.02.2004**
(21) Application number: 03017073.2
(22) Date of filing: 28.07.2003
(51) Int. Cl.: B41C 1/10, C09D 11/02

(54) **Electrocoagulation printing ink, printed material and electrocoagulation printing method**

(30) Priority: 30.07.2002 JP 2002221669
(71) Applicant: Toyo Ink Manufacturing Co. Ltd., Tokyo 104-0031 (JP)
(72) Inventor: Kumada, Hideaki, Toyo Ink Mfg. Co., Ltd., Tokyo 104-0031 (JP); Iida, Yasuo, Toyo Ink Mfg. Co., Ltd., Tokyo 104-0031 (JP); Betto, Atsushi, Toyo Ink Mfg. Co., Ltd., Tokyo 104-0031 (JP); Jyonai, Kazuhiro, Toyo Ink Mfg. Co., Ltd., Tokyo 104-0031 (JP)
(74) Representative: Koepe, Gerd L., Dipl.-Chem.

(57) **Abstract**

An electrocoagulation printing ink according to the present invention contains an electrolytically coagulable polymer, a soluble electrolyte, a pigment, a polyethyleneimine, and a liquid medium. In accordance with such an arrangement, the ink according to the present invention can give a high quality printed material without causing scumming in a non-image area of a substrate. The printed material according to the present invention is printed using the electrocoagulation printing ink according to the present invention. An electrocoagulation printing method according to the present invention is carried out using the electrocoagulation printing ink according to the present invention.

## Description

The present invention relates to an improvement in the field of electrocoagulation printing and, in particular, it relates to an electrocoagulation printing ink that shows excellent performance in preventing scumming, and a printed material and an electrocoagulation printing method employing same.

Electrocoagulation printing is a printing method that enables a printed material to be obtained directly from a computer by means of a digital image signal without needing any printing plate, and has the merit of a short printing time since processes such as plate making and plate changing are not required, unlike conventional printing methods such as, for example, offset printing, relief printing, screen printing, and gravure printing. Since the electrocoagulation printing method can employ an aqueous ink (electrocoagulation printing ink) containing at least an electrolytically coagulable polymer, a soluble electrolyte, a coloring agent such as a pigment, and a liquid medium, in comparison with the conventional printing methods employing an oil-based ink, there is no danger of air pollution and fire, and the method also excels in terms of safety and health during operation.

An electrocoagulation printing method and an apparatus therefor are disclosed in US Pat. Nos. 4,895,629 (registration date: January 23, 1990), 5,538,601 (registration date: July 23, 1996), 5,693,206 (registration date: December 2, 1997), etc. In this printing method, the surface of a positive electrode is cleaned and then coated with a coating agent containing an oily substance, and coagulated ink dots corresponding to a desired image are formed on the surface of the positive electrode by electrocoagulation of an electrocoagulation printing ink containing an electrolytically coagulable polymer, and after removing ink that has not coagulated, that is, non-coagulated ink remaining on the surface of the positive electrode, the exposed coagulated ink dots are transferred to a substrate so as to print the image on the substrate. The electrocoagulation printing apparatus used has a rotating cylindrical, etc. positive electrode having a passivated surface, a plurality of negative electrodes disposed so as to be separated from the positive electrode by a fixed distance, positive electrode surface cleaning means, coating agent coating means, electrocoagulation printing ink supply means, non-coagulated ink removal means, and transfer means for transferring coagulated ink dots on the positive electrode to the substrate.

After the printing ink is electrolytically coagulated, in the step of removing non-coagulated ink, the non-coagulated ink can be removed from the surface of the positive electrode by a method involving, for example, rubbing the surface of the positive electrode with a soft rubber squeegee, and the coagulated ink is subsequently transferred to the substrate as the image. However, in this stage, if the hardness of the squeegee is increased or the pressure with which the squeegee is pressed against the surface of the positive electrode is increased in order to remove (scrape off) the non-coagulated ink completely from the surface of the positive electrode, the coagulated ink dots themselves might be partially removed or damaged, thus causing a decrease in the printing density or forming lines and thereby preventing a clear image from being obtained and degrading the quality of the printed material, which is a problem. On the other hand, if the force with which the non-coagulated ink is scraped off by the squeegee is weak, the non-coagulated ink in a non-image area cannot be removed completely, thus causing scumming in the printed material. As described above, since it is extremely difficult and complicated to remove the non-coagulated ink by adjusting the force of the squeegee so that the coagulated ink dots are not damaged and no scumming occurs, there has been a desire for development of an electrocoagulation printing ink that makes it easy to remove non-coagulated ink from the surface of the positive electrode.

When the particle size of a pigment dispersed in an electrocoagulation printing ink is too fine, scraping off by a squeegee is inadequate, thus causing scumming, and JP-A-2000-319565 therefore describes an electrocoagulation printing ink that can prevent degradation of the quality due to scumming by satisfying a requirement for the 50 cumulative volume percent particle size of the pigment to be 0.3 to 2 µm and the proportion of particles of 0.2 µm or less in the particle size distribution to be 25 wt % or less. However, in order to achieve the particle size distribution of the pigment, it is necessary to adjust the degree of dispersion during a pigment dispersing step so that the pigment is not dispersed excessively, but on the other hand if an adequate dispersion cannot be obtained and the particle size is too large, coloring might be inadequate, thus making the printing density insufficient, or the efficiency of an ink filtering step might deteriorate due to residual coarse particles, and there has been therefore a desire for improvements in the quality stability and the workability. Furthermore, if the printing speed is increased in order to improve the productivity, the scumming becomes noticeable due to the influence of the fine particles, and it is difficult to obtain a good printed material in some cases.

It is therefore an object of the present invention to provide an electrocoagulation printing ink that allows non-coagulated ink to be easily removed from the surface of a positive electrode during printing and that can prevent the occurrence of undesirable scumming in a non-image area of a substrate, to provide a high quality printed material using the above ink without deterioration in quality due to scumming, and to provide an electrocoagulation printing method, employing the above ink, that can produce a high quality printed material.

The present inventors have found that adding a polyethyleneimine to an electrocoagulation printing ink makes undesirable fine pigment particles that cause scumming bond to each other (or aggregate), thus reducing the influence of the particles and thereby having an effect in preventing scumming.

The electrocoagulation printing ink according to the present invention therefore includes an electrolytically coagulable polymer, a soluble electrolyte, a pigment, a polyethyleneimine, and a liquid medium.

The printed material according to the present invention is obtained by printing using the electrocoagulation printing ink according to the present invention.

The electrocoagulation printing method according to the present invention is carried out using the electrocoagulation printing ink according to the present invention.

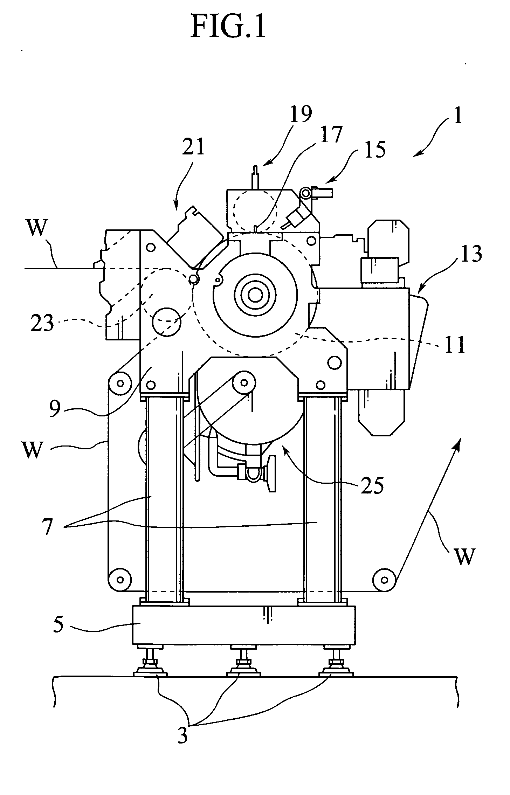

FIG. 1 is a schematic view showing an example of the electrocoagulation printing apparatus that can be used for embodying the present invention.

An embodiment of the present invention is explained below. An 'ink' referred to in the explanation below denotes an 'electrocoagulation printing ink' in every case.

The ink according to the present invention contains at least an electrolytically coagulable polymer, a soluble electrolyte, a pigment, a polyethyleneimine, and a liquid medium. Since the polyethyleneimine has a positive charge when dissolved in the ink, the electric charge causes the polyethyleneimine to form a bond with anionically dispersed pigment and, moreover, since the polyethyleneimine exhibits a comparatively strong bonding effect toward fine particles, the fine pigment particles of 0.2 µm or less, which cause scumming, can be reduced without needing to form coarse particles that exceed 2 µm. As a result, the effect in preventing scumming can be enhanced, and the use of the ink of the present invention can provide a high quality printed material in which there is no undesirable scumming in a non-image area of a substrate.

The polyethyleneimine that can be used may have a straight-chain structure or a branched-chain structure, and may be partially modified with an ethoxy group, etc. The weight average molecular weight of the polyethyleneimine is preferably 300 or more from the viewpoint of odor and irritation when making contact with the body, preferably 10,000 or less from the viewpoint of the effect in aggregating fine particles of pigment, and more preferably 500 to 1000. The weight average molecular weight can be determined, for example, by gel filtration chromatography (detector: differential refractometer) or from an equation relating the polymer limiting viscosity and the weight average molecular weight. The amount of polyethyleneimine added is preferably 0.005 wt % or more of the total weight of the ink from the viewpoint of the effect in improving scumming, preferably 0.5 wt % or less from the viewpoint of printing density, and more preferably 0.05 to 0.2 wt %. When the amount of polyethyleneimine added is too large, the viscosity of the ink increases, thus requiring dilution with water, and the printing density tends to decrease. Polyethyleneimine is commercially available from Nippon Shokubai Co., Ltd. and BASF Aktiengesellschaft under the product names Epomin and Lupasol respectively. Since an aqueous solution of polyethyleneimine is strongly basic, it is preferably neutralized before use.

The electrolytically coagulable polymer is a polymer that can form a chemical bond with a polyvalent metal ion, preferably has a functional group such as a carboxyl group, a sulfone group, a phosphate group, or a nitrate group, and particularly preferably has a carboxyl group or a sulfone group. The weight average molecular weight thereof is preferably in the range of about 10,000 to about 1,000,000, and more preferably about 100,000 to about 600,000. When the weight average molecular weight of the polymer is less than about 10,000, it is difficult for the ink to coagulate, sufficiently large coagulated dots cannot be obtained, and the density of the printed material might be low. When the weight average molecular weight of the polymer exceeds about 1,000,000, the viscosity of the ink is too high, and the workability during ink preparation and printing tends to deteriorate. The polymer framework may be a branched-chain structure, but is preferably a straight-chain structure.

Specific examples of the above electrolytically coagulable polymer include natural polymers such as albumin, gelatin, casein, and agar, and synthetic polymers such as a polyacrylic acid, a modified polyacrylic acid, a modified polyacrylamide, a polyacrylic hydrazide, and a copolymer of acrylic acid and acrylamide. They can be used singly or in a combination of two or more types. The modified polymer means a polymer whose physical or chemical properties have been modified by, for example, esterification, amidation, hydrolysis, or partial copolymerization with another monomer.

The electrolytically coagulable polymer is preferably a modified polyacrylamide, examples thereof including nonionic, anionic, and cationic acrylamide polymers. Such modified polyacrylamides are commercially available from manufacturers including Arakawa Chemical Industries Inc., Mitsubishi Chemical Corporation, Harima Chemical Inc., Mitsui Chemicals Ltd., Mitsui Cytec Ltd., and Sanyo Chemical Industries Ltd. An anionic acrylamide polymer is particularly preferable, and a specific example of which is Accostrength 86, which is commercially available from Mitsui Cytec Ltd.

The amount of electrolytically coagulable polymer added is preferably about 4 to about 15 wt %, and more preferably about 6 to about 12 wt %, based on the total weight of the ink. When the amount thereof added is less than about 4 wt %, sufficiently large coagulated dots may not be obtained, and the density of the coagulated ink transferred to the substrate tends to be low. When the amount thereof added is more than about 15 wt %, the viscosity of the ink may be too high, and the workability during ink preparation and printing tends to deteriorate.

The soluble electrolyte is added to the ink in order to increase the electrical conductivity of the ink and cause a desired breakdown of a passive oxide film on the surface of a positive electrode. Preferred electrolytes include halides, and a chloride is particularly preferable. Examples of alkali metal halides and alkaline earth metal halides include lithium chloride, sodium chloride, potassium chloride, and calcium chloride. Furthermore, ammonium chloride, nickel chloride, copper chloride, manganese chloride, etc. can be preferably used. They can be used singly or in a combination of two or more types.

The electrical conductivity of the ink is preferably 1 mS/cm or more at 25°C, and preferably roughly 200 mS/cm or less. When the electrical conductivity is less than 1 mS/cm, the ink may not be electrolytically coagulated sufficiently, and the reflection density of the coagulated ink transferred to a substrate might be low. The soluble electrolyte is therefore added to the ink so that the electrical conductivity thereof is in the above-mentioned range, and the amount thereof added is generally about 5 to about 10 wt %, and more preferably about 6 to about 9 wt %, based on the total weight of the ink.

The pigment can be selected freely from organic and inorganic pigments that are normally used in printing inks, paints, and recording materials. Examples of the organic pigment include azo, phthalocyanine, anthraquinone, perylene, perinone, quinacridone, thioindigo, dioxazine, isoindolinone, quinophthalone, azomethine, diketopyrrolopyrrole, and isoindoline pigments. Azo pigments are preferably used for a yellow ink and a magenta ink, and examples thereof include Lionol Yellow #1919 commercially available from Toyo Ink Mfg. Co., Ltd. and Permanent Rubine F6B or L6B commercially available from Clariant GmbH. A copper phthalocyanine pigment, for example, Hostaperm Blue B2G or B3G commercially available from Clariant GmbH can preferably be used for a cyan ink.

Examples of the inorganic pigment include carbon black, titanium oxide, zinc oxide, zinc sulfide, barium sulfate, calcium carbonate, and chrome oxide. Carbon black is preferably used for a black ink. Specific examples of the carbon black include Carbon Black Monarch 120 commercially available from Cabot Corp.

These pigments can be used singly, or in a combination of two or more types in order to adjust the hue and the density, in an amount that can ensure that the density and the coloring power of the coagulated ink dots formed by electrocoagulation of the ink are adequate. The amount thereof added to the ink is preferably about 4 to about 20 wt % based on the total weight of the ink. The pigment may be used in the form of an aqueous slurry, or this slurry may be powdered by drying, for example, by spray drying. The pigment is preferably dispersed in advance in a liquid medium using a dispersing agent, which will be described later, and/or the above-mentioned electrolytically coagulable polymer, and the remaining components such as the soluble electrolyte may be added to the pigment dispersion thus obtained.

With regard to the liquid medium in which the electrolytically coagulable polymer, the soluble electrolyte, the polyethyleneimine, and the pigment described above are dissolved or dispersed to give a desired ink, water is preferably used.

In a preferred embodiment, the ink of the present invention can further contain, as a dispersant for dispersing the pigment, a surfactant such as an anionic surfactant, a nonionic surfactant, a cationic surfactant, or an amphoteric surfactant, singly or in a combination of two or more types. Although a required dispersion can be achieved without using a dispersant when the pigment is of a self-dispersing type or when it is dispersed using the electrolytically coagulable polymer, adding a dispersant can achieve an appropriate dispersion more easily and improve the effect of preventing scumming.

Such a surfactant is not particularly limited, but it is preferable to use an alkali metal salt of a naphthalenesulfonic acid-formaldehyde condensate, and it is more preferable to use a compound of general formula (1) below; 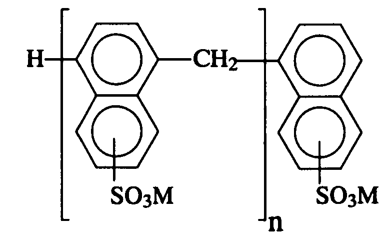 (in the formula, M is an alkali metal and n is an integer of 2 to 15). In particular, it is preferable for M to be sodium and for n to be 5 to 12. The alkali metal salts of naphthalenesulfonic acid-formaldehyde condensates are commercially available from Kao Corporation, Sanyo Chemical Industries, Ltd., San Nopco Limited, Dai-ichi Kogyo Seiyaku Co., Ltd., Kyoeisha Chemical Company, Ltd., Toho Chemical Industry Co., Ltd., Boehme Filatex Canada Inc., etc. For example, the compound having the above general formula (1) in which M is sodium and n is 7 is sold in the form of an aqueous solution which has about 42% of the effective component, under the trademark Closperse 2500 from Boehme Filatex Canada Inc.

Furthermore, as another preferred example of the dispersant, a bisphenol sulfonic acid polymer can be cited. This polymer is a polymer of a compound having a bisphenol framework and having a sulfonic acid group (-SO₃H) in the molecule and, for example, a compound represented by general formula (2) below can be preferably used. 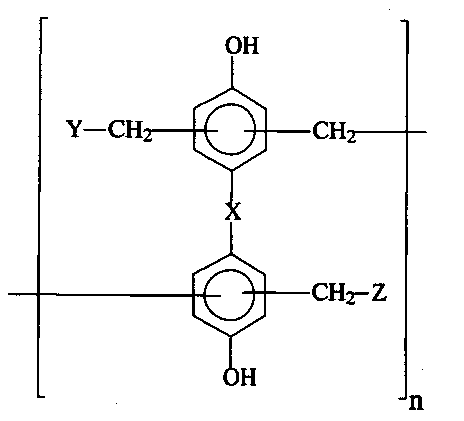 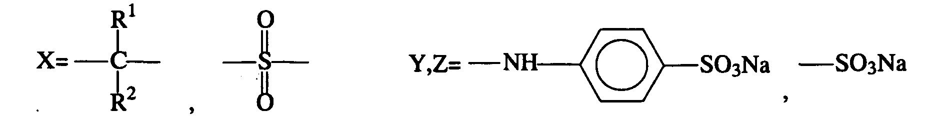 In the formula, R¹ and R² independently denote hydrogen atoms or lower alkyl groups, and are preferably hydrogen atoms, methyl groups, or ethyl groups. Such a bisphenol sulfonic acid polymer is commercially available as an anionic dispersant from Nippon Paper Industries Co., Ltd. under the trade name of Visperse P-125, etc.

The amount of dispersant added to the ink is preferably about 0.1 to about 5.0 wt % based on the total weight of the ink, and more preferably about 0.2 to about 3.0 wt %. When the amount thereof added is less than 0.1 wt %, since the surface of the pigment particles may not be sufficiently coated and the surface of the pigment particles may not be adequately hydrophilic, the affinity of the pigment particles for an oily substance in a coating agent used during a printing process may be high, thus easily causing scumming in some cases. In other cases, the stability of the pigment particles may deteriorate, and the pigment particles may reaggregate when mixed with the electrolytically coagulable polymer and the soluble electrolyte, thus easily causing a decrease in the printing density and forming lines on the printed material. When the amount of dispersant added is more than 5.0 wt %, the surface activity of the dispersant might degrade the surface tension of the ink, thus causing scumming, increasing the viscosity of the ink, or making the ink foam.

In a preferred embodiment, the ink of the present invention can contain a sequestering agent that forms a complex with the polyvalent metal ion. The polyvalent metal ion is an essential component that forms coagulated ink dots during electrocoagulation printing, but if the polyvalent metal ion is present in the ink, the polyvalent metal ion forms a chemical bond with the electrolytically coagulable polymer in the ink before the ink coagulates electrolytically, thus increasing the viscosity of the ink. The viscosity of the ink increases as the concentration of the polyvalent metal ion increases, and when the concentration of the polyvalent metal ion is high, the ink gels before electrocoagulation. Specifically, when the concentration of the polyvalent metal ion in the ink, for example, ferric ion, exceeds about 25 ppm, the viscosity of the ink is higher than is appropriate to carry out normal printing, and when it exceeds about 140 ppm, the ink gels. Such a polyvalent metal ion might be contained in a starting material for the ink or mixed during an ink preparation process. When non-coagulated ink is reused by removing it from the surface of the positive electrode and returning it to ink supply means, a small amount of coagulated ink is recovered together with the non-coagulated ink, and the ink that will be reused contains a small amount of polyvalent metal ions released from the surface of the positive electrode. As a result, the longer the electrocoagulation printing time, the higher the concentration of polyvalent metal ions in the ink supplied from the printing ink supply means.

In order to prevent such an undesirable increase in the viscosity of the ink, the ink of the present invention can contain the sequestering agent in such an amount that the concentration of polyvalent metal ions in the ink is maintained at about 20 ppm or less, and preferably about 15 ppm or less. When the sequestering agent is used excessively, the complex-forming sequestering agent remains in the ink after almost all the polyvalent metal ions are complexed, and the remaining sequestering agent forms complexes with the essential polyvalent metal ions that are released from the surface of the positive electrode during electrocoagulation and that should be involved in forming coagulated ink dots, thus interfering with the crosslinking of the electrolytically coagulable polymer and degrading the electrocoagulability. The sequestering agent is therefore used in an amount that does not interfere with the electrocoagulation of the ink. Addition of the sequestering agent to the ink may be carried out by a known method of, for example, addition during ink preparation, immediately before printing, or during printing.

As described above, in electrocoagulation printing, there is a case in which the amount of polyvalent metal ions in the ink gradually increases when carrying out printing for a long time, and it is therefore preferable for the amount of sequestering agent added to an ink used when starting printing (a starting ink) to be different from the amount thereof added to an ink used for replenishing during printing (a replenishing ink). That is, a larger amount of sequestering agent is used in the replenishing ink. An appropriate amount of sequestering agent added depends on the concentration of polyvalent metal ions in the ink, the type of sequestering agent employed, and also the type and the amount of electrolytically coagulable polymer contained in the ink, and can not be determined in a standard way. In general, the amount of sequestering agent is preferably about 0.01 to about 0.3 wt % based on the total weight of the ink. When the ink is used as the starting ink, the amount of sequestering agent is preferably 0 to about 0.2 wt %, and more preferably about 0.01 to about 0.15 wt %, based on the total weight of the ink. On the other hand, when the ink is used as the replenishing ink, the amount of sequestering agent added to the ink is preferably about 0.05 to about 0.3 wt %, and more preferably about 0.1 to about 0.3 wt %, based on the total weight of the ink, taking into consideration the increase during printing of the amount of polyvalent metal ions to be complexed.

From the viewpoint of stability of bonding with metal ions, the sequestering agent is preferably a compound capable of forming a ring structure into which the metal ion is incorporated as a central metal atom. Preferred examples thereof include polyaminocarboxylic acids such as ethylenediaminetetraacetic acid (EDTA), iminodiacetic acid (IDA), hydroxyethyliminodiacetic acid (HIDA), ethylenebis(hydroxyphenyl)glycine (EHPG), hydroxyethylethylenediaminetriacetic acid (HEDTA), nitrilotriacetic acid (NTA), ethylenebis(oxyethylenenitrilo)tetraacetic acid (EGTA), cyclohexanediaminetetraacetic acid (CyDTA), diethylenetriaminepentaacetic acid (DTPA), and triethylenetetraaminehexaacetic acid (TTHA), and salts thereof. They can be used singly or in a combination of two or more types.

Although the ink of the present invention can prevent undesirable scumming throughout a non-image area by decreasing the amount of fine particles, there are cases in which scumming in the form of spots may undesirably occur separately from the scumming throughout the area. In a preferred embodiment, in order to prevent such spot-like scumming, the ink of the present invention can contain an acetylene glycol surfactant, a fatty acid ester, a fatty acid, etc. They can be used singly or in a combination of two or more types.

The ink of the present invention may further contain other various additives as necessary. For example, it is preferable for it to contain a biocidal agent for preventing the growth of bacteria, molds, and the like. Preferable examples of the biocidal agent include sodium dehydroacetate, sodium benzoate, sodium pyridinethiol-1-oxide, zinc pyridinethiol-1-oxide, 1,2-benzisothiazolin-3-one, and amine salts of 1,2-benzisothiazolin-3-one. Specific examples thereof include one commercially available from Gray Products under the trademark Parmetol K-50. The amount of the biocidal agents used is preferably about 0.01 to about 2.0 wt % based on the total weight of the ink. They may be used singly or in a combination of two or more types depending on the type of fungi, mold, etc.

Furthermore, the ink of the present invention can contain, as necessary, an infrared-ray absorbing agent, a UV-ray absorbing agent, a fragrance, an antioxidant, an anti-foaming agent, a silane coupling agent, a plasticizer, a flame retardant, a moisture retentive agent, an organic solvent, etc.

The printing ink of the present invention can be prepared by uniformly dispersing each of the above components using a dispersing machine. A generally used dispersing machine such as a roller mill, a ball mill, a pebble mill, an attritor, or a sand mill can be used. In particular, the sand mill is preferably used from the viewpoint of dispersion efficiency. In the case where unexpected coarse particles or bubbles are contained in the ink, it is desirable to remove them by a conventionally known method using a deaerator, a filter, and the like, since they may interfere with electrocoagulation of the ink and degrade the image quality.

The hydrogen ion concentration (pH) of the ink thus prepared is preferably in the range of about 3 to about 8, and more preferably in the range of about 3 to about 6, when measured at 25°C. When the pH falls outside the range of about 3 to about 8, the density of the coagulated ink transferred onto the substrate tends to be low. The pH of the ink may be adjusted using a known acid or alkali such as hydrochloric acid, sulfuric acid, acetic acid, sodium hydroxide, potassium hydroxide, or ammonium hydroxide.

The viscosity of the ink is preferably in the range of about 100 to about 1500 mPa·s at 30°C. If the viscosity of the ink is lower than about 100 mPa·s. then the density of the coagulated ink transferred to the substrate might be low, and if the viscosity thereof is higher than about 1500 mPa·s. then the workability during ink preparation and printing tends to be poor. The viscosity of the ink can be adjusted by appropriately choosing the type and the amount of starting materials such as the electrolytically coagulable polymer, the pigment, and the liquid medium.

The ink of the present invention is particularly preferably an aqueous liquid dispersion having a pH of about 3 to about 6 and containing, on a total ink weight basis, about 4 to about 15 wt % of the anionic acrylamide polymer, about 0.005 to about 0.5 wt % of the polyethyleneimine, about 4 to about 20 wt % of the pigment, about 5 to about 10 wt % of the alkali metal halide, about 60 to about 80 wt % of water, about 0.1 to about 5 wt % of the bisphenol sulfonic acid polymer, about 0.01 to about 0.3 wt % of the polyaminocarboxylic acid or a salt thereof, and about 0.01 to about 2 wt % of the biocidal agent.

The electrocoagulation printing method according to the present invention employs the above-mentioned ink according to the present invention, and can provide a high quality printed material with less scumming in which an image is formed by electrocoagulation of the ink of the present invention.

The electrocoagulation printing method means an entire printing process involving forming an image by electrocoagulation of the ink of the present invention and transferring the image to a substrate. More specifically, the entire printing process includes at least the steps (b), (c), (d), (e), and (f) below, and preferably includes all the steps (a) to (f) below:
(a) cleaning step: cleaning the surface of a positive electrode (a rotating cylinder);
(b) coating step: coating the surface of the positive electrode with micro droplets of a coating agent containing an oily substance;
(c) filling step: filling the gap between the positive electrode and a negative electrode with an ink;
(d) coagulating step: applying a voltage between the positive electrode and selected negative electrodes to form coagulated ink dots representative of a desired image on the surface of the positive electrode;
(e) removing step: removing non-coagulated ink remaining on the surface of the positive electrode; and
(f) transferring step: bringing the coagulated ink dots into contact with a substrate, transferring them thereto, and forming an image on the substrate.

The 'electrocoagulation of the ink' in this electrocoagulation printing means coagulation of the ink in the coagulating step (d), in which applying a voltage between the electrodes breaks a passive oxide film on the surface of the positive electrode, thus releasing polyvalent metal ions from the surface of the positive electrode, and the polyvalent metal ions react with the electrolytically coagulable polymer contained in the ink, thus causing the ink to coagulate and thereby forming coagulated ink dots on the surface of the positive electrode. That is, the polyvalent metal ions released from the positive electrode during the application of current form an ionic bond or a coordination bond with polymer molecules, thus crosslinking the polymer molecules with each other and forming a water-insoluble coagulate (dot). The polyvalent metal ions from the surface of the positive electrode are trivalent iron ions or trivalent aluminum ions when the positive electrode is made of stainless steel or aluminum respectively.

The coating agent for coating the surface of the positive electrode used in the step (b) is applied to the surface of the positive electrode prior to electrocoagulation of the ink so that the coagulated ink can easily be transferred from the surface of the positive electrode to the substrate. It contains an oily substance such as an unsaturated fatty acid, an unsaturated vegetable oil, a fatty acid monoester, isostearic acid, a silicon oil, or a nonionic surfactant having an ethylene oxide chain. The coating agent may also contain a metal oxide for controlling the viscosity.

Electrocoagulation printing may be carried out using, for example, an electrocoagulation printing apparatus as shown in FIG. 1. As schematically shown in FIG. 1, an electrocoagulation printing apparatus 1 has a base plate 5 mounted on a plurality of foot sections 3, and a plurality of frames 7 standing on the base plate 5 so as to extend vertically. A pair of vertical plates 9 are disposed in upper portions of the frames 7, and a cylindrical positive electrode 11, which can be freely rotated by a drive motor (not illustrated), is held between the two vertical plates 9. The positive electrode 11 extends in a direction perpendicular to the paper of FIG. 1 and has a passivated surface formed from a passive oxide film.

The electrocoagulation printing apparatus 1 also includes coating agent coating means 13 for applying a coating agent along the surface of the positive electrode so as to form micro droplets of coating agent on the surface of the positive electrode surface; ink supply means 15 provided with temperature adjusting means (not illustrated) for supplying an ink to the positive electrode; a print head 19 having a plurality of negative electrodes 17 for forming, on the surface of the positive electrode by electrocoagulation of the ink, a plurality of coagulated ink dots representative of a desired image; and, furthermore, non-coagulated ink removal means 21 such as a squeegee, for removing non-coagulated ink from the surface of the positive electrode. In addition, a pressure roller 23 is provided as means for bringing the coagulated ink dots produced on the surface of the positive electrode and representing the desired image into contact with a substrate W so as to bring about transfer of the coagulated ink dots from the surface of the positive electrode to the substrate W (as a result, the image is printed on the substrate W). For example, the positive electrode 11 is made of stainless steel or aluminum, the non-coagulated ink removal means 21 is a soft polyurethane squeegee, and the pressure roller 23 is made of polyurethane. The distance between the positive electrode 11 and the plurality of negative electrodes 17 is preferably about 50 to about 100 µm. Provided beneath the positive electrode 11 is positive electrode surface cleaning means 25 that includes temperature adjusting means (not illustrated), the means 25 removing, by cleaning from the surface of the positive electrode, the coagulated ink which has not been transferred and which remains on the surface of the positive electrode, the non-coagulated ink, and the coating agent.

According to such an arrangement, the coating agent is applied to the surface of the rotating positive electrode 11 by the coating agent coating means 13 to form micro droplets of the coating agent, and the ink is then supplied by the ink supply means 15 to the gap between the positive electrode 11 and the negative electrodes 17, which are positioned at a fixed distance from the positive electrode 11. Coagulated ink dots are formed by applying a voltage between the positive electrode and selected negative electrodes so as to electrocoagulate the ink thus supplied, and the non-coagulated ink is then removed from the surface of the positive electrode by the non-coagulated ink removal means (squeegee) 21.

The coagulated ink dots formed on the surface of the positive electrode are then brought into contact with the substrate W at a position between the positive electrode 11 and the pressure roller 23 so as to transfer the dots onto the substrate W, thereby carrying out printing.

Multicolor printing is possible by providing a required number of electrocoagulation printing apparatuses 1 shown in FIG. 1 corresponding to the number of colors employed, producing on the surface of the positive electrode of each of the printing apparatuses an image formed from electrocoagulated ink dots having a desired color, and transferring the images at the corresponding registered transfer positions. For example, process printing can be carried out by arranging four electrocoagulation printing apparatuses 1 shown in FIG. 1 in tandem and printing in sequence using yellow, cyan, magenta, and black inks.

A center drum system printing apparatus of a type disclosed in US Pat. No. 5,538,601 described above can be used as the electrocoagulation printing apparatus employing the ink of the present invention. This printing system is a system in which a printing unit that includes positive electrode surface cleaning means, coating agent coating means, ink supply means, a plurality of negative electrodes positioned a fixed distance from a positive electrode, non-coagulated ink removal means, and transfer means (a pressure roller) is arranged around the single rotating cylindrical positive electrode having a passivated surface. For example, four printing units are arranged around the single positive electrode for printing in sequence using yellow, cyan, magenta, and black inks, thus making process printing possible.

The substrate is most suitably non-coated printing paper or coated printing paper (coated paper, art paper, cast coated paper, etc.) A water absorbing sheet in which an image receiving layer is provided on a plastic substrate can also be preferably used. The image receiving layer is not particularly limited but, for example, in order to absorb a water-based ink, it can comprise a water absorbing resin such as polyvinyl alcohol, polyvinyl pyrrolidone, or polyacrylamide.

The printed material according to the present invention is obtained by printing using the above-mentioned ink of the present invention. Use of the ink of the present invention can give a high quality printed material in which scumming in a non-image area is reduced. The substrate is not particularly limited, and any substrate such as those cited above can be used, and the printed material of the present invention can preferably be obtained by the above-mentioned electrocoagulation printing method while not being limited thereto.

### EXAMPLES

The present invention will be described below in more detail by means of examples, but is not limited to these examples and can be modified as long as it does not depart from the scope and spirit of the present invention.

In the examples below, "wt %" is denoted simply by "%". The measurements were conducted as follows: the pH was measured at 25°C using a glass electrode hydrogen ion concentration meter manufactured by DKK Corp.; the electrical conductivity was measured at 25°C using a DS-12 conductivity meter manufactured by Horiba Ltd.; the viscosity was measured at 30°C using a B-type viscometer manufactured by Tokimec Inc.; the particle size of a pigment in an ink was measured using a Mastersizer 2000 light scattering type (laser diffraction type) particle size distribution meter manufactured by Malvern Instruments; and the reflection density of a printed material was measured using a model 938 spectrodensitometer manufactured by X-Rite, Inc.

### (1) Ink preparation

### [Example 1]

A magenta ink of Example 1 was prepared using the starting materials below:

| | |
|---|---|
| Magenta azo pigment | 10.722% |
| (Permanent Rubine F6B; Clariant GmbH) | |
| Anionic dispersant | 1.894% |

(sodium salt of naphthalenesulfonic acid-formaldehyde condensate) (Closperse 2500; Boehme Filatex Canada Inc.)

| | |
|---|---|
| Anionic acrylamide polymer | 8.326% |
| (Accostrength 86; Mitsui Cytec Ltd.) | |
| Potassium chloride | 10.186% |
| Disodium EDTA dihydrate | 0.013% |
| Biocidal agent | 0.050% |
| Polyethyleneimine | 0.107% |

(Epomin SP-006, weight average molecular weight (Mw): 600; Nippon Shokubai Co., Ltd.)

| | |
|---|---|
| Deionized water | 68.702% |
| Total | 100.0% |

The pigment was first dispersed in water using the dispersant by passing it three times through a sand mill at a discharge rate of 6 kg/minute to give a pigment dispersion. The polymer was then added to the pigment dispersion so obtained, potassium chloride and disodium EDTA dihydrate were next added thereto, and the biocidal agent and deionized water were then added thereto. A 10% aqueous solution of polyethyleneimine was prepared using ion-exchanged water, neutralized using hydrochloric acid so as to have a pH of about 5.0, and a predetermined amount was added to the ink. The pH was then adjusted to 4.1 using hydrochloric acid. The electrical conductivity of the printing ink thus obtained was 106.9 mS/cm and the viscosity thereof was 1288 mPa·s. The proportion of particles of 0.2 µm or less in the ink thus prepared was 6.9% (vol %: proportion of particles of 0.2 µm or less in the particle size distribution measured by the above particle size distribution meter.)

### [Examples 2 to 9, Comparative Examples 1 to 4]

In the same manner as in Example 1, inks according to Examples 2 to 9 and Comparative Examples 1 to 4 were prepared using the corresponding starting materials listed in Table 1. The electrical conductivity, the viscosity, and the proportion of pigment particles of 0.2 µm or less of the ink so obtained are shown in Table 1.

### (2) Electrocoagulation printing

Electrocoagulation printing was carried out using the ink of each of the Examples and Comparative Examples by means of the electrocoagulation printing apparatus shown in FIG. 1 of a type disclosed in US Pat. No. 5,639,206. A cylindrical positive electrode made of stainless steel and a plurality of negative electrodes having a diameter of about 50 µm were used as the positive and negative electrodes (the distance between the two electrodes was 50 µm). The coating agent used was oleic acid. The ink and a cleaning liquid used in a device for cleaning the positive electrode were heated to 40°C, and printing was carried out while maintaining the ink and the positive electrode at 40°C. When the level of the ink in an ink feeder decreased during printing, the ink was replenished so as to keep a constant ink level. The substrate used was a coated paper.

The reflection density (Dmax) of a shadow area and the reflection density of a non-image area (scumming) of a printed material thus obtained were measured. Dmax is for evaluating variations in the image density of each color by means of the magnitude of the numerical value. The scumming can be evaluated as being absent when the reflection density of the non-image area is less than 0.01, and when it is less than 0.005 the printed material can be evaluated as being of a higher quality. The results are shown together in Table 1.

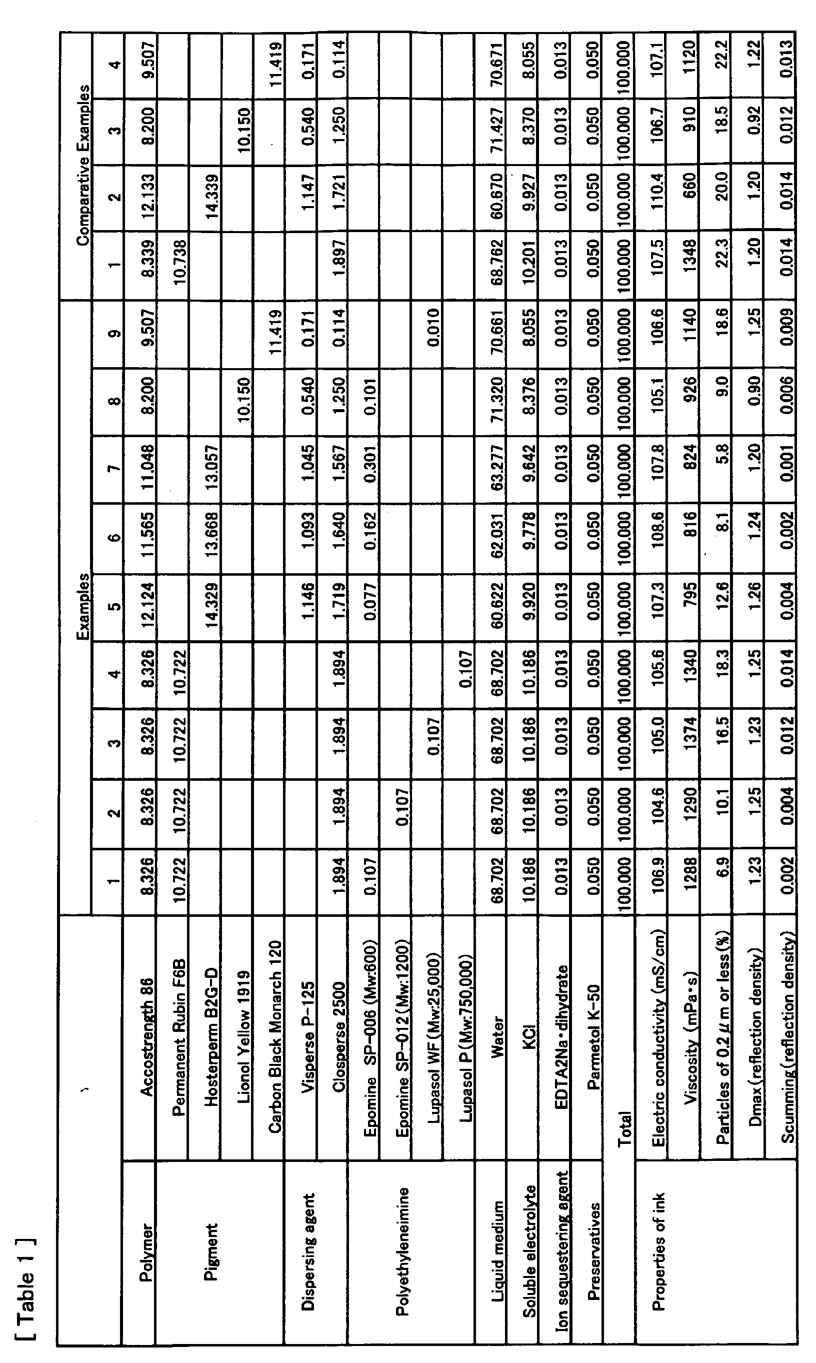

As is clear from Table 1, the inks of the examples containing polyethyleneimine had a small proportion of pigment particles having a diameter of 0.2 µm or less, the scumming in the non-image areas was significantly suppressed, and high quality printed materials having no lines (scratches), etc. in the image areas were obtained. In contrast, the inks of Comparative Examples 1 to 4 to which no polyethyleneimine was added had a large proportion of particles of 0.2 µm or less, the scumming in the non-image areas of printed materials was visible to the naked eye, and the quality was inferior.

## Claims

1. An electrocoagulation printing ink comprising an electrolytically coagulable polymer, a soluble electrolyte, a pigment, a polyethyleneimine, and a liquid medium.

2. The electrocoagulation printing ink according to Claim 1 wherein the polyethyleneimine has a weight average molecular weight of 300 to 10,000.

3. The electrocoagulation printing ink according to either Claim 1 or 2 wherein the polyethyleneimine is contained in an amount of 0.005 to 0.5 wt % based on the total weight of the electrocoagulation printing ink.

4. A printed material that is printed using the electrocoagulation printing ink according to any one of Claims 1 to 3.

5. An electrocoagulation printing method that is carried out using the electrocoagulation printing ink according to any one of Claims 1 to 3.
